(19) Europäisches Patentamt
European Patent Office
Office européen des brevets

(11) **EP 1 919 017 A1**

(12) **EUROPÄISCHE PATENTANMELDUNG**

(43) Veröffentlichungstag:
**07.05.2008 Patentblatt 2008/19**

(51) Int Cl.:
***H01M 8/02*** *(2006.01)*

(21) Anmeldenummer: **07017196.2**

(22) Anmeldetag: **03.09.2007**

(84) Benannte Vertragsstaaten:
**AT BE BG CH CY CZ DE DK EE ES FI FR GB GR
HU IE IS IT LI LT LU LV MC MT NL PL PT RO SE
SI SK TR**
Benannte Erstreckungsstaaten:
**AL BA HR MK RS**

(30) Priorität: **20.09.2006 DE 102006044763**

(71) Anmelder: **Behr GmbH & Co. KG
70469 Stuttgart (DE)**

(72) Erfinder:
• **Kaiser, Wolfram
70437 Stuttgart (DE)**
• **Watzlawski, Markus
73760 Ostfildern (DE)**

(54) **Kühlbare Bipolarplatte aus zwei gefügten Platten**

(57)   Die Erfindung betrifft eine Bipolarplatte (6) für einen Brennstoffzellenstapel, umfassend zwei Formkörper (2), in welche jeweils mehrere Vertiefungen (V1 bis V6) in unterschiedlicher Umformtiefe eingebracht sind, wobei die beiden Formkörper (2) zumindest an zueinander korrespondierenden Vertiefungen (V4) miteinander gefügt sind.

Fig. 3

EP 1 919 017 A1

**Beschreibung**

Die Erfindung betrifft eine Bipolarplatte aus miteinander gefügten Formkörpern, insbesondere für einen Brennstoffzellenstapel eines Fahrzeugs.

Die Umwandlung von chemischer in elektrische Energie mittels Brennstoffzellen stellt eine effiziente und umweltfreundliche Methode zur Gewinnung von elektrischem Strom aus den Elementen Wasserstoff und Sauerstoff dar. Dabei finden üblicherweise zwei räumlich getrennte Elektrodenreaktionen statt, bei denen Elektronen freigesetzt beziehungsweise gebunden werden. Die Reaktanden Sauerstoff und Wasserstoff können in Form verschiedener Fluide bereitgestellt werden, sie müssen nicht zwingend in reiner Form vorliegen. Die Verwendung von reinem, molekularem Sauerstoff und Wasserstoff ist ebenso möglich wie die Verwendung von Luftsauerstoff und Methan. Ein erstes Beispiel für zwei korrespondierende Elektrodenreaktionen sind folgende Reaktionen:

$$H_2 => 2\,H^+ + 2\,e^- \text{ (Anodenreaktion)}$$

$$2\,H^+ + 2\,e^- + \tfrac{1}{2}\,O_2 => H_2O \text{ (Kathodenreaktion)}$$

Die Art der Reaktion hängt von der Bauart der Brennstoffzelle und von den verwendeten Fluiden ab. Ein zweites Beispiel für zwei korrespondierende Elektrodenreaktionen sind folgende Reaktionen:

$$H_2 + O^{2-} => H_2O + 2\,e^- \text{ (Anodenreaktion A)}$$

$$CO + O^{2-} => CO_2 + 2\,e^- \text{ (Anodenreaktion B)}$$

$$O_2 + 4\,e^- => 2\,O^{2-} \text{ (Kathodenreaktion)}$$

Allen Brennstoffzellen gemein sind einerseits der Transport einer Spezies in elektrisch nichtneutraler Form durch einen Elektrolyten und andererseits der parallel verlaufende Transport von Elektronen durch einen äußeren Leiter, um die Spezies nach dem Transportvorgang in einen elektrisch neutralen Zustand zurückzuversetzen

Durch elektrische Verbindung der räumlich getrennten Reaktionszonen kann ein Teil der dabei umgesetzten Reaktionsenthalpie direkt als elektrischer Strom gewonnen werden. Üblicherweise werden mehrere elektrisch in Serie geschaltete Brennstoffzellen aufeinandergestapelt und ein solchermaßen gebildeter Stapel als Stromquelle verwendet. Eine einzelne Brennstoffzelle besteht dabei aus einer Elektrolyteinheit wie einer Membran sowie aus zwei mit Katalysatormaterial belegten Elektroden. Die Membran befindet sich trennend zwischen den Reaktanden und weist eine Ionenleitfähigkeit auf, beispielsweise eine $H^+$-Protonenleitfähigkeit oder eine $O^2$-Leitfähigkeit. Die Elektroden sind unter anderem zum Abgriff des von der Brennstoffzelle erzeugten elektrischen Stroms erforderlich.

Die Fluide, beispielsweise Wasserstoff und Sauerstoff, und das Reaktionsprodukt Wasser sowie gegebenenfalls ein Fluid, das zur Abführung von überschüssiger Reaktionswärme dient, strömen durch Fluidkanäle in die Bereiche der Reaktionszonen hinein und aus ihnen hinaus. Insbesondere bei Verwendung eines wärmeabführenden Fluids wird durch eine thermische Verbindung der jeweiligen Fluidkanäle für einen ausreichenden Wärmeübertrag zwischen den jeweiligen Fluiden gesorgt. Ein Kanalsystem von Fluidkanälen für ein bestimmtes Fluid wird allgemein auch als Flowfield bezeichnet.

Die Reaktanden und Reaktionsprodukte werden im Folgenden als Reaktionsfluide bezeichnet. Als Temperierfluid wird ein Fluidmedium bezeichnet, das geeignet ist, einer Vorrichtung beziehungsweise einer Reaktionszone Wärme zuzuführen oder sie daraus abzuführen,

Es ist bekannt, die in einer Brennstoffzelle entstehende Abwärme zumindest teilweise über ein Temperierfluid, das durch ein separates Kühlkanalsystem strömt, abzuführen. Da die Temperaturdifferenz zwischen Brennstoffzelle und Umgebung üblicherweise geringer ist als bei einem Verbrennungsmotor vergleichbarer Leistung, ist der Kühlungsaufwand in der Regel größer. Wird als Temperierfluid Umgebungsluft verwendet, wird aufgrund der relativ geringen Wärmekapazität von Luft ein wesentlich größerer Volumenstrom für die Abführung der Abwärme benötigt als für die Versorgung der Kathodenelektrode mit dem Reaktionsmedium.

Es sind Brennstoffzellenstapel bekannt, bei denen die Kühlung der Brennstoffzellen durch Einstellung eines ausreichend großen Volumenstroms des kathodenseitigen Reaktionsfluids erzielt wird, der gleichzeitig zur Kühlung dient. Aufgrund von Austrocknungseffekten ist beim Einsatz solcher Vorrichtungen allerdings die Betriebstemperatur beziehungsweise die maximale Lebensdauer stark eingeschränkt. Um negative Auswirkungen wie die Austrocknung der Elektrolyteinheit aufgrund zu großer Volumenströme zu vermeiden, ist es zweckmäßig, das Temperierfluid und die Reaktionsfluide getrennt zu führen.

Dementsprechend sind Brennstoffzellenstapel bekannt, bei denen Kühlkanalsystem und Kathodenkanalsystem vollständig voneinander getrennt sind.

Beispielsweise beschreibt die DE 100 15 360 A1 eine Bipolarplatte für Brennstoffzellen, die aus zwei geprägten Platten besteht. Eine Fläche der geprägten Platten weist jeweils eine positive Kanalstruktur auf und eine andere Fläche weist eine korrespondierende negative Kanalstruktur auf. Durch Verbinden beider Platten ergibt sich ein platteninneres Kanalsystem für ein Kühlmittel und an den Außenflächen jeder Platte ein Kanalsystem für Gasströme.

Wird eine Bipolarplatte aus umgeformten und gefügten Folien hergestellt, die mittels Umgebungsluft gekühlt werden soll, ergibt sich das Problem, dass mit der Kühlluft ein relativ großer Volumenstrom durch die Platte geführt werden muss. Aus Gründen der Systemeffizienz ist es zweckmäßig, die zugehörigen Kühlkanäle mit einem geringen Druckverlust bzw. mit einem hohen hydraulischen Durchmesser zu versehen, da die Kühlluft dann energiesparend mit einem Axialgebläse befördert werden kann.

Aus der deutschen Patentanmeldung mit dem Aktenzeichen 10 2005 046 795.4 ist ein Konzept bekannt, das die Belüftung von Kathode und Kühlkanälen auf Basis einer gemeinsamen Luftfördereinrichtung durch Trennung der Gasströme in der Bipolarplatte ermöglicht, ohne das Problem der Austrocknung der Polymermembran durch zu hohe Kathodenstöchiometrien aufzuweisen. Nachteilig an dieser Anordnung ist jedoch, dass keine Rückgewinnung von Wasser aus dem Kathodenabgas -zum Beispiel für Dampfreformierungsprozesse- möglich ist.

Aus der DE 10 2005 055 043 A1 ist ein Konzept bekannt, das die Luftkühlung einer Bipolarplatte ermöglicht. Beim dort vorgeschlagenen Konzept sind für die Fertigung jedoch vier übereinander liegende Folienlagen erforderlich, was zu höheren Herstellkosten und zu höherem Gewicht führt.

Der Erfindung liegt daher die Aufgabe zugrunde, eine verbesserte Bipolarplatte anzugeben, welche eine Luftkühlung von gestapelten Brennstoffzellen ohne die aufgeführten Nachteile ermöglicht.

Die Aufgabe wird gelöst durch eine Bipolarplatte, welche die in Anspruch 1 angegebenen Merkmale aufweist. Hinsichtlich des Brennstoffzellenstapels wird die Aufgabe erfindungsgemäß gelöst durch die im Anspruch 17 angegebenen Merkmale.

Vorteilhafte Weiterbildungen der Erfindung sind Gegenstand der abhängigen Ansprüche.

Die erfindungsgemäße Bipolarplatte umfasst zwei Formkörper, in welche jeweils mehrere Vertiefungen in unterschiedlicher Umformtiefe eingebracht sind, wobei die beiden Formkörper an zueinander korrespondierenden und aneinander liegenden Vertiefungen miteinander gefügt sind. Dabei wird im Weiteren als Bezugsebene oder Nullpunktebene die Ebene derjenigen Vertiefung gewählt, die insbesondere die Fügestelle der Formkörper bildet. Die Formkörper sind insbesondere im Bereich von Durchbrüchen, deren Ränder die Nullpunktebene bilden bzw. durch Vertiefungen mit minimaler Umformtiefe gebildet sind, miteinander gefügt. Darüber hinaus können weitere Fügestellen im aktiven Bereich der Bipolarplatte vorgesehen sein, die eine verbesserte Leitung des elektrischen Stroms durch die Bipolarplatte ermöglichen. Durch die Ausbildung der Formkörper als geformte Halbschalen mit bereichsweise, z. B. kanalförmig, flächig und/oder punktförmig, unterschiedlichen, durch Umformung entstandenen Reliefelementen mit teilweise unterschiedlicher Umformtiefe und teilweise unterschiedlichem Umformgrad und deren miteinander Fügen ist eine Bipolarplatten mit plattenaußenseitigen Strömungsfeldern und einem platteninneren Strömungsfeld ermöglicht. Bedingt durch die verschiedenen Umformgrade und unterschiedlichen Umformtiefen ist das platteninnere Strömungsfeld derart ausgebildet, dass es die Kanäle für die plattenaußenseitigen Strömungsfelder von innen und somit bodenseitig weitgehend umspült.

Zur Bildung der plattenaußenseitigen Strömungsfelder weist der jeweilige Formkörper mindestens zwei Vertiefungen mit jeweils zugehöriger, insbesondere gleichbleibender Umformtiefe auf, die kanalförmig ausgebildet sind. Dabei bildet eine der Vertiefungen mit geringer Umformtiefe gegenüber der Bezugsebene einen Kanalboden und die andere Vertiefung mit großer Umformtiefe gegenüber der Bezugsebene einen Kanalsteg. Die Vertiefung für den Kanalsteg weist dabei eine maximale Umformtiefe und gegebenenfalls einen maximalen Umformgrad aller Vertiefungen des jeweiligen Formkörpers auf. Durch miteinander Fügen der beiden Formkörper, beispielsweise randseitig, bilden die eingebrachten Kanäle auf der Plattenaußenseite der Bipolarplatte Strömungsfelder für Reaktionsmedien. Dabei verlaufen die Kanäle vorzugsweise parallel zueinander. Darüber hinaus verlaufen die Kanäle entlang der Strömungsrichtung mäanderförmig in Art von umlaufenden Windungen.

In einer möglichen Ausführungsform weist der jeweilige Formkörper weitere, in den Kanalboden eingebrachte Vertiefungen mit einer zugehörigen, insbesondere gleich bleibenden geringeren Umformtiefe als die Umformtiefe der Kanäle, insbesondere des Kanalbodens auf. Alternativ können die in den Kanalboden eingebrachten Vertiefungen (auch Kanalbodenvertiefungen genannt) auch in der gleichen Ebene wie die Bezugsebene verlaufen und eine entsprechende niedrige oder keine Umformtiefe aufweisen. Beispielsweise sind die in den Kanalboden eingebrachten Vertiefungen (auch Kanalbodenvertiefungen genannt) als Punktvertiefungen, z. B. Noppen, und/oder Linienvertiefungen, z. B. Sicken, ausgebildet. Durch Variation der geometrischen Gestalt dieser Vertiefungen kann die Art der vorbeistreifenden Kühlluftströmung und auch der lokale Wärmeübergang definiert beeinflusst werden. Je nach Größe der Umformtiefe können die Kanalbodenvertiefungen außerdem als Abstandshalter zwischen den beiden Formkörpern oder als Versteifungselemente dienen. Für eine besonders bevorzugte Ausgestaltung ist vorgesehen, dass die Böden der Kanalbodenvertiefungen beim Fügen der Formkörper diese gegeneinander abstützen. Dies erhöht einerseits die mechanische Stabilität der Bipolarplatte. Andererseits kann dadurch wie oben erwähnt die Strömungsstärke und -art im zugehörigen Strömungsfeld vorgegeben werden.

Zweckmäßigerweise sind die Kanalbodenvertiefungen der beiden Formkörper zueinander korrespondierend ausgebildet. Durch Verbinden der beiden Formkörper derart, dass die Kanalbodenvertiefungen aufeinander liegen, ist ein platteninneres Strömungsfeld gebildet. Das platteninnere Strömungsfeld dient insbesondere als Kühlströmungsfeld für die plattenaußenseitigen Reaktionsströmungsfelder. Beispielsweise wird als Kühlmedium Luft verwendet. Dabei kann das Fluid Luft, insbesondere Luftsauerstoff einerseits als Reaktionsfluid durch eines der plattenaußenseitigen Strömungsfelder fließen. Andererseits kann diese Luft im platteninneren Strömungsfeld als Temperier- oder Kühlfluid dienen.

Vorzugsweise sind weitere Vertiefungen mit einer zugehörigen, insbesondere gleich bleibenden Umformtiefe oder mit verschiedenen, insbesondere abwechselnden Umformtiefen als Fügeflächen ausgebildet. Die als Fügeflächen dienenden Vertiefungen (auch Fügevertiefungen genannt) bilden die Bezugsebene und weisen keine oder eine minimale Umformtiefe gegenüber den größeren Umformtiefen der anderen Vertiefungen des jeweiligen Formkörpers auf. Die Fügevertiefungen können flächig oder kanalförmig in Form von den Rand des Formkörpers umlaufenden Sicken ausgeführt sein. Zweckmäßigerweise können darüber hinaus randseitige Fügeflächen mit abwechselnd großen und kleinen Umformtiefen vorgesehen sein. Die hierdurch bei miteinander gefügten Formkörpern gebildeten Hohlräume dienen dem Einleiten bzw. Ausleiten des Kühlfluids für das platteninnere Strömungsfeld.

Um die plattenaußenseitigen Strömungsfelder gegenüber benachbarten Platten, beispielsweise einer Endplatte oder einer Elektroden-Membran-Einheit, abzudichten, weisen die Formkörper in einer besonders bevorzugten Ausführung weitere Vertiefungen mit einer zugehörigen, insbesondere gleich bleibenden Umformtiefe auf, die als Dichtungsnut ausgebildet sind. Dabei verlaufen die als Dichtungsnut dienen Vertiefungen (auch Dichtungsvertiefung genannt) insbesondere in einem randseitigen Bereich des Formkörpers. In diese Dichtungsvertiefungen mit gegenüber den Kanalvertiefungen reduzierter Umformtiefe ist eine zumindest bereichsweise schwebende Dichtungsnut ermöglicht. In einer weiteren besonderen Ausführung wird der Dichtungsbereich nicht mit einer Dichtungsnut ausgeführt, sondern als ebene Fläche ausgeführt bzw. mit einem Dichtsteg versehen, da auf diese Art zum Beispiel auch eine Membran-Elektrodenanordnung mit integrierter Dichtung bzw. Dichtlippe verbaut werden kann.

In einer weiteren Ausführungsform sind weitere Vertiefungen mit einer zugehörigen Umformtiefe vorgesehen, die entlang des Verlaufs der Vertiefung variabel, insbesondere ansteigend ausgebildet sind und einen Übergangsbereich bilden. Derartige, ansteigende oder abfallende Umformtiefen aufweisende Vertiefungen dienen als Übergangsbereich von Ein- oder Ausströmöffnungen in die Kanäle und in das jeweilige Strömungsfeld. Insbesondere verläuft der Übergangsbereich von der Kanalbodenebene der Kanalvertiefungen zu den Fügeflächen der Fügevertiefungen im Ein- oder Ausströmbereich (auch Portbereich genannt).

In einer weiteren vorteilhaften Ausführungsform verläuft das platteninnere Strömungsfeld quer zu den plattenäußeren Strömungsfeldern. Dies ermöglicht eine effiziente Kühlung der äußeren reaktiven Strömungsfelder, indem das innere Kühlströmungsfeld über die gesamte Länge der äußeren Strömungsfelder gleichmäßig eine Kühlung bewirkt. In einer weiteren vorteilhaften Ausführung verläuft das platteninnere Strömungsfeld weitgehend parallel zu den plattenäußeren, mäandrierenden Strömungsfeldern. Dies ermöglicht die Realisierung einer kombinierten Kreuz-Gegenstrom-Kühlung bzw. Kreuz-Gleichstrom-Kühlung des Bauteils.

Vorzugsweise sind eines der plattenäußeren Strömungsfelder an einer Kathode und das andere plattenäußere Strömungsfeld an einer Anode des Brennstoffzellenstapels anordbar. In diesem Fall kann als ein Fluid insbesondere Luft verwendet werden, so dass einerseits Luftsauerstoff im plattenäußeren Strömungsfeld als Reaktionsfluid dient und andererseits die Luft im platteninneren Strömungsfeld als Temperierfluid dient.

Zum Zu- bzw. Ableiten der Reaktionsfluide weist der jeweilige Formkörper in einem geeigneten, randseitig gelegenen Bereich Durchbrüche auf. Vorteilhafterweise liegen Zu- und Abführungen für die Reaktionsfluide einander auf der Bipolarplatte diagonal gegenüber. Darüber hinaus ist jede andere geeignete Anordnung der Zu- und Abführungen, beispielsweise eine gleichseitige Anordnung von Ports analog zu DE 10 2004 039 779 A1. die hiermit ausdrücklich zum Offenbarungsgehalt gehört, möglich.

Zweckmäßigerweise sind die Formkörper aus einem elektrisch leitfähigen Werkstoff, z. B. Titan, Graphit, mit einer elektrischen Leitfähigkeit von mindestens 5000 S/cm gebildet. Insbesondere sind die Formkörper jeweils aus einem geformten Metallblech oder einem elektrisch leitfähigen Kunststoffformteil gebildet. Beispielsweise weist der jeweilige Formkörper eine Scheibendicke von 0,05 mm bis 1 mm auf. Ein derartig dünnes Metallblech erlaubt eine einfache Umformung und einen hinreichend guten Wärmeübergang sowie eine hinreichend gute Stabilität. Auch sind durch ein derart dünnes Scheibenelement ein geringes Gewicht und ein niedriger Aufbau eines Brennstoffzellenstapels ermöglicht. Zusätzlich ist eine gute Wärmeleitfähigkeit gegeben. Dabei ist der jeweilige Formkörper aus einem metallischen Werkstoff mit einer mechanischen Festigkeit von mindestens 100 MPa gebildet.

Ausführungsbeispiele der Erfindung werden anhand einer Zeichnung näher erläutert. Darin zeigen:

Fig. 1   eine perspektivische Darstellung eines Formkörpers für eine Bipolarplatte in Draufsicht von oben,

Fig. 2   eine perspektivische Darstellung des Formkörpers gemäß Figur 1 in Draufsicht von unten,

Fig. 3   eine perspektivische Darstellung einer Bipolarplatte aus zwei zueinander korrespondierenden und miteinander gefügten Formkörpern, und

Fig. 4   eine Seitenansicht der aus zwei gefügten Formkörpern gebildeten Bipolarplatte gemäß Figur 3.

Einander entsprechende Teile sind in allen Figuren mit den gleichen Bezugszeichen versehen.

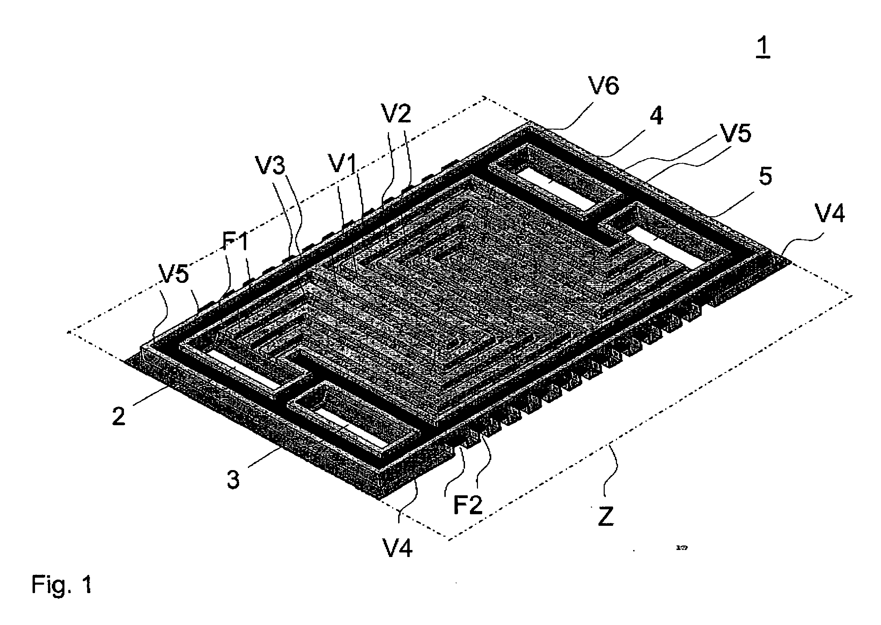

Figur 1 zeigt einen Formkörper 1 für eine Bipolarplatte. Der Formkörper 1 besteht beispielsweise aus umgeformtem Metallblech und weist verschiedene Vertiefungen V1 bis Vn unterschiedlicher Umformtiefe auf.

Die verschiedenen Vertiefungen V1 bis Vn mit den unterschiedlichen Umformtiefen bilden dabei auf der Unterseite und Oberseite Strömungsfelder für Fluide.

Mindestens zwei Vertiefungen V1, V2 bilden dabei ein erstes Strömungsfeld F1 für ein Reaktionsfluid R1, z. B. Luft oder Wasserstoff. Die Vertiefungen V1 und V2 verlaufen parallel zueinander und sind kanalförmig in Form von Sicken ausgebildet, die entlang des Verlaufs mit Windungen versehen sind. Die Vertiefungen V1 und V2 werden im Weiteren zur besseren Verständlichkeit Kanalvertiefungen V1 und V2 genannt. Die Kanalvertiefungen V1 und V2 weisen beispielsweise entlang ihres Verlaufes eine Mäanderform auf, wobei eine der Vertiefungen V1 mit geringer Umformtiefe gegenüber der Bezugsebene Z einen Kanalboden und die andere Vertiefung V2 mit großer Umformtiefe gegenüber der Bezugsebene Z einen Kanalsteg bilden. Mit anderen Worten: Die Kanalvertiefung V1 hat eine kleinere Umformtiefe als die Kanalvertiefung V2. Dabei weisen die den Kanalsteg bildenden Kanalvertiefungen V2 eine maximale Umformtiefe aller Vertiefungen V1 bis Vn des Formkörpers 1 auf.

Zur Bildung eines weiteren Strömungsfeldes F2 auf der Unterseite des Formkörpers 1 sind in den Kanalboden der Kanalvertiefung V1 weitere Vertiefungen V3 mit einer kleinen Umformtiefe gegenüber der Bezugsebene Z und einer kleineren Umformtiefe gegenüber der Kanalvertiefung V1 eingebracht. Alternativ können die Vertiefungen V3 auch auf gleicher Ebene wie die Bezugsebene Z liegen. Die in den Kanalboden eingebrachten Vertiefungen V3 werden im Weiteren Kanalbodenvertiefungen V3 genannt. In dem Ausführungsbeispiel sind die Kanalbodenvertiefungen V3 als Punktvertiefungen, z.B. Noppen, ausgeführt. Alternativ können die Kanalbodenvertiefungen V3 auch linienförmig, z. B. als Sicke, oder in einer anderen geeigneten Form analog zu den in der US 6 510 870 B1, die hiermit ausdrücklich zum Offenbarungsgehalt gehört, in Rohren gezeigten Turbulenzerzeugern ausgebildet sein, so dass insbesondere ein hoher Wärmeübergang bei relativ geringem Strömungswiderstand ermöglicht ist.

Weitere Vertiefungen V4 können als Fügeflächen dienen und werden im Weiteren Fügevertiefungen V4 genannt. Die Fügevertiefungen V4 weisen eine insbesondere gleichbleibende und gegenüber den anderen Umformtiefen der anderen Vertiefungen V1 bis V3 eine minimale oder keine Umformtiefe auf. Die Fügevertiefungen V4 bilden in diesem Ausführungsbeispiel die Bezugsebene Z. Es kann auch jede andere Vertiefung V1 bis V3 als Bezugsebene ausgewählt werden. Darüber hinaus können die Fügevertiefungen V4 insbesondere die den Rand des Formkörpers 1 bildenden Fügevertiefungen V4 abwechselnd verschiedene Umformtiefen aufweisen, so dass sich ein mäanderförmiger Rand ergibt.

Weitere Vertiefungen V5 mit einer zugehörigen und insbesondere gleich bleibenden Umformtiefe sind als schwebende Dichtungsnut ausgebildet und umlaufen insbesondere den Rand des Formkörpers 1 und das Strömungsfeld F1 sowie Durchbrüche 2 bis 4, die als Ein- und Ausströmungen für Fluide dienen. Die Vertiefungen V5 werden im Weiteren Dichtungsvertiefungen genannt. Die Dichtungsvertiefungen V5 bilden schwebende Dichtungsnuten, die insbesondere Ein- und Ausströmbereiche der Durchbrüche 2 bis 4 umgeben. Die Stege der Dichtungsvertiefungen V5 weisen eine große Umformtiefe gegenüber der Bezugsebene Z auf, wohingegen der Boden der Dichtungsvertiefungen eine kleine Umformtiefe gegenüber der Bezugsebene Z aufweist.

Für eine gute Zu- bzw. Abführung der Fluide sind weitere Vertiefungen V6 mit einer variabel ansteigenden Umformtiefe vorgesehen. Die Vertiefungen V6 bilden Übergangsbereiche vom Ein- bzw. Ausströmbereich der Durchbrüche 2 bis 4 zu den Kanälen der Kanalvertiefungen V1 und V2. Die Vertiefungen V6 werden im Weiteren Übergangsvertiefungen genannt.

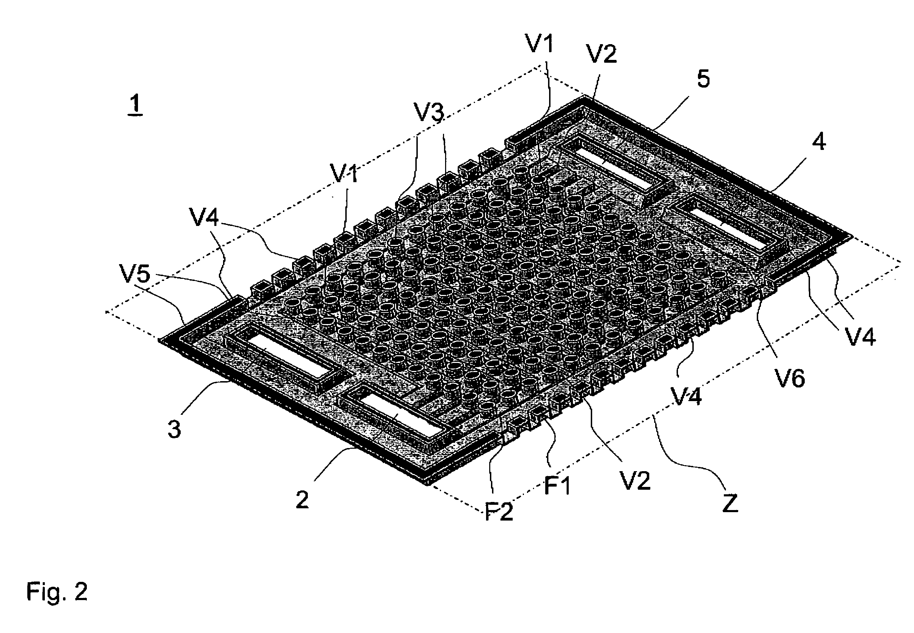

In Figur 2 ist der Formkörper 1 von der Unterseite dargestellt. Hierbei sind die noppenförmigen Kanalbodenvertiefungen V3 sowie zumindest bereichsweise verlaufende mäanderförmige Rand mit den entsprechenden Fügevertiefungen V4 erkennbar. Weisen die Kanalbodenvertiefungen V3 und die Fügevertiefungen V4 eine gleiche Umformtiefe auf, so können die Kanalbodenvertiefungen V3 auch als Abstützelement dienen. Darüber hinaus bilden die Kanalbodenvertiefungen V3 Versteifungselemente für eine ausreichende mechanische Stabilität des Formkörpers

Der ansteigende Verlauf und somit die variierende Umformtiefe der Übergangsvertiefungen V6 in den Ein- bzw. Ausströmbereichen der Durchbrüche 2 bis 4 sind hier deutlich erkennbar. Je nach Funktion und Aufbau der Bipolarplatte können die Durchbrüche 2 bis 4 auch an einer anderen geeigneten Stelle des Formkörpers 1 eingebracht sein, wobei dann die Kanalvertiefungen V1 und V2 einen entsprechend anderen Verlauf aufweisen. Durch die gebrochenen seitlichen Rand des Formkörpers 1 durch die abwechselnden Umformtiefen der Fügevertiefungen V4 strömt in das Strömungsfeld F2 ein Fluid, z. B. ein Kühlfluid wie Luft, ein. In diesem Ausführungsbeispiel verläuft das unterseitige Strömungsfeld F2 quer zum oberseitigen Strömungsfeld F1.

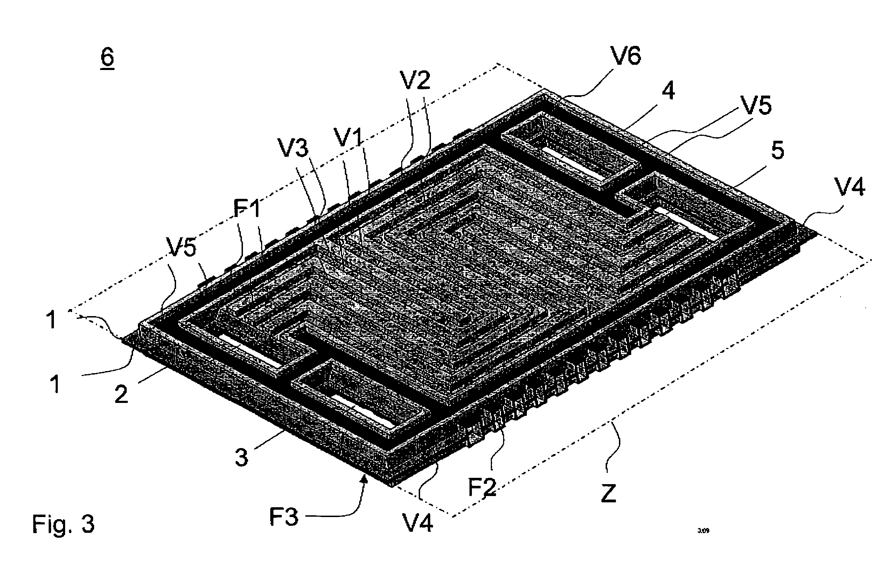

In Figur 3 ist eine Bipolarplatte 6 gezeigt, die aus zwei zueinander korrespondierenden und miteinander an Fügevertiefungen V4 gefügten Formkörpern 2 gebildet ist. Die beiden Formkörper 2 liegen mit den jeweiligen Unterseiten auf den Kanalbodenvertiefungen V3 und den Fügevertiefungen V4 aufeinander. Je nach Vorgabe werden die beiden Formkörper 2 im Bereich der Fügevertiefungen V4 miteinander gefügt, z. B. geschweißt, geklebt, gelötet, gebördelt. Die Kanalbodenvertiefungen V3 dienen dann auch der Abstützung der beiden Formkörper 2 oder als Abstandshalter und der Versteifung der Formkörper 2 und der Bipolarplatte 6. Auch können die in den Kanalboden eingebrachten Vertiefungen V3 als Strömungsleiter oder Strömungsbeeinflusser des zwischen den beiden Formkörpern 2 verlaufenden platteninneren Strömungsfeld F2 dienen. Auch kann die Formkörper 2 im Bereich der Kanalbodenvertiefungen V3 miteinander gefügt werden. In diesem Fall weisen die Fügevertiefungen V4 und die Kanalbodenvertiefungen V3 gleiche Umformtiefen auf. Anderenfalls können die Umformtiefen gering verschieden sein.

Durch das Fügen der beiden Formkörper 2 sind durch die jeweiligen Kanalvertiefungen V1 und V2 der beiden Formkörper 2 zwei plattenäußere Strömungsfelder F1 und F3 gebildet. Durch die Kanalbodenvertiefungen V3 zur Abstützung der beiden Formkörper 2 werden im Platteninneren Hohlräume gebildet, die ein platteninneres Strömungsfeld F2 bilden. Über den mäanderförmigen Rand der Formkörper 2 strömt ein entsprechendes Fluid, insbesondere ein Kühlfluid, z. B. Luft, in das platteninnere Strömungsfeld F2 ein und umströmt bodenseitig weitgehend vollständig die Kanalvertiefungen V1 und V2, die die Reaktionsströmungsfelder F1 und F3 bilden. Bei alternativ linienförmigen Kanalbodenvertiefungen V3 verlaufen die Kanalvertiefungen V1 tiefer, d.h. sie weisen eine kleinere Umformtiefe gegenüber den Kanalbodenvertiefungen V3 und eine kleine Umformtiefe gegenüber der Bezugsebene auf oder umgekehrt.

Die plattenäußeren Strömungsfelder F1 und F3 sind entsprechend dem Aufbau in nicht näher dargestellter Art und Weise an eine Kathode bzw. an eine Anode eines Brennstoffzellenstapels anordbar. Bei Verwendung der Bipolarplatte in einem Brennstoffzellenstapel, sind auf die Bipolarplatte 6 ober- und/oder unterseitig abwechselnd Membranen und/oder Elektrolyteinheiten in nicht näher dargestellter Art und Weise aufstapelbar.

Das Fluid des einen äußeren Strömungsfeldes F1 oder F3 kann dabei einerseits zur Versorgung der Kathodenreaktion mit Reaktionsluft und andererseits zur Kühlung der Kathoden- und der Anodenreaktion mit Kühlluft aufgespaltet werden, indem die Luft auch dem inneren Strömungsfeld F2 zugeführt wird. Die Anzahl der Kanalbodenvertiefungen V3 kann variieren und richtet sich insbesondere nach den Anforderungen hinsichtlich einer hinreichenden mechanischen Stabilität und der Einstellung einer entsprechenden Kühlströmung.

In einer weiteren, besonders bevorzugten Ausführung weist der jeweilige Formkörper 2 in einem dem Einströmbereich der Reaktionsströme stromabwärts entfernten Bereich Verbindungsöffnungen zwischen dem jeweiligen Reaktionsstrom des betreffenden äußeren Strömungsfeld F1 bzw. F3 und dem Kühlstrom der inneren Strömungsfeldes F2 auf. In diesem stromabwärts entfernten Bereich weist der die Kathode belüftende Reaktionsstrom bereits eine signifikante Reduzierung seines Sauerstoffgehalts und eine ebenfalls signifikante Erhöhung seines Wasserdampfanteils auf. Durch diese Verbindungsöffnungen, die als Schlitze, Bohrungen, Poren oder Maschen etc. ausgeführt sein können, ist die Diffusion von Sauerstoff und Wasserdampf zwischen den beiden Volumenströmen möglich. Dadurch kann die Sauerstoffkonzentration des die Kathode belüftenden Volumenstroms erhöht und seine Wasserdampfbeladung gesenkt werden, was zu einer Verbesserung des Zellwirkungsgrades und der Zellleistung unter Eliminierung der problematischen Austrocknungseffekte führt.

Auch können in den Durchbrüchen 2 bis 4 nicht näher dargestellte Klappinlays wie in der unveröffentlichten deutschen Patentanmeldung mit dem Aktenzeichen 10 2005 058 350.4, die hiermit ausdrücklich zum Offenbarungsgehalt gehört, vorgesehen sein.

Die Umformtiefen der einzelnen Vertiefungen V1 bis V6 steigen von der Fügevertiefung V4 mit minimaler oder keiner Umformtiefe über die Kanalbodenvertiefung V3 mit gleicher oder minimaler Umformtiefe, die Dichtungsvertiefung V5, die Übergangsvertiefung V6 und die Kanalvertiefung V1 (= Kanalboden) mit entsprechend steigenden und gegebenenfalls gleichen Umformtiefen bis hin zur Kanalvertiefung V2 (= Steg) mit maximaler Umformtiefe an. Auch können zwei oder mehrere Vertiefungen V1 bis V6 gleiche Umformtiefen aufweisen. Die Umformtiefen variieren zwischen 0,3 mm bis 2 mm.

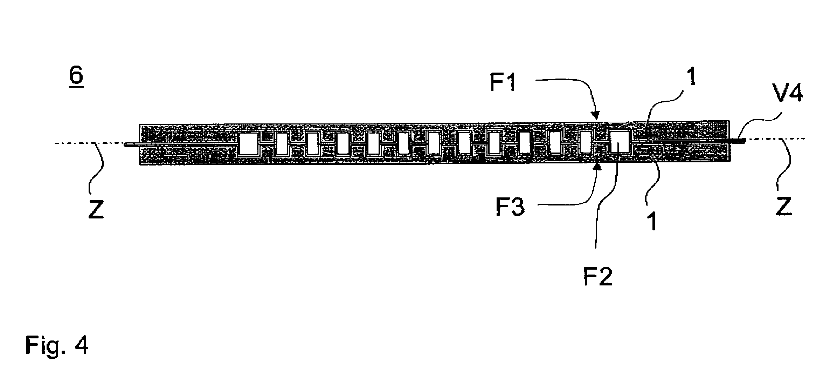

Figur 4 zeigt die Bipolarplatte 6 in einer Seitenansicht. Dabei sind die beiden Formkörper 2 im Bereich der Fügevertiefungen V4 miteinander gefügt. Bedingt durch die hohe Umformtiefe der Kanalvertiefungen V1 und V2 und die geringe oder keine Umformtiefe aufweisenden Fügevertiefungen V4 und der oben beschriebenen Kanalbodenvertiefungen V3 bildet sich zwischen den beiden gefügten Formkörper 2 das platteninnere Strömungsfeld F2 aus. Ober- und unterseitig der Bipolarplatte 6 verlaufen die durch die Kanalvertiefungen V1 und V2 gebildeten plattenäußeren Strömungsfelder F1 und F3.

**Patentansprüche**

1. Bipolarplatte (6) für einen Brennstoffzellenstapel, umfassend zwei Formkörper (2), in welche jeweils mehrere Vertiefungen (V1 bis V6) in unterschiedlicher Umformtiefe eingebracht sind, wobei die beiden Formkörper (2) zumindest an zueinander korrespondierenden und aneinander liegenden Vertiefungen (V4) miteinander gefügt sind.

2. Bipolarplatte nach Anspruch 1, wobei mindestens zwei Vertiefungen (V1, V2) mit jeweils zugehöriger Umformtiefe kanalförmig ausgebildet sind.

3. Bipolarplatten nach Anspruch 2, wobei eine der Vertiefungen (V1) mit kleiner Umformtiefe gegenüber einer Bezugsebene (Z) einen Kanalboden und die andere Vertiefung (V2) mit einer größeren Umformtiefe gegenüber der Vertiefung (V1) bzw. der Bezugsebene (Z) einen Kanalsteg bildet.

4. Bipolarplatten nach Anspruch 2 oder 3, wobei bei miteinander gefügten Formkörpern (2) die in die Formkörper (2) eingebrachten Kanäle plattenäußere Strömungsfelder (F1, F3) bilden.

5. Bipolarplatte nach Anspruch 4, wobei weitere Vertiefungen (V3) mit einer zugehörigen Umformtiefe in den Kanalboden eingebracht sind.

6. Bipolarplatte nach Anspruch 5, wobei die in den Kanalboden eingebrachten Vertiefungen (V3) als Punktvertiefungen und/oder Linienvertiefungen ausgebildet sind.

7. Bipolarplatte nach Anspruch 5 oder 6, wobei die in den Kanalboden eingebrachten Vertiefungen (V3) als Abstandshalter zwischen den beiden Formkörpern (2) dienen.

8. Bipolarplatte nach einem der Ansprüche 5 bis 7, wobei die in den Kanalboden eingebrachten Vertiefungen (V3) als Strömungsleiter oder Strömungsbeeinflusser zwischen den beiden Formkörpern (2) dienen.

9. Bipolarplatte nach einem der Ansprüche 5 bis 8, wobei die in den Kanalboden eingebrachten Vertiefungen (V3) der beiden Formkörper (2) zueinander korrespondierend ausgebildet sind und durch Verbinden der beiden Formkörper (2) ein platteninneres Strömungsfeld (F3) gebildet ist.

10. Bipolarplatte nach einem der Ansprüche 1 bis 9, wobei weitere Vertiefungen (V4) mit einer zugehörigen Umformtiefe oder mit verschiedenen, insbesondere abwechselnden Umformtiefen als Fügeflächen ausgebildet sind.

11. Bipolarplatte nach Anspruch 10, wobei randseitige Fügeflächen abwechselnd große Umformtiefen und niedrige Umformtiefen aufweisen.

12. Bipolarplatte nach einem der Ansprüche 1 bis 11, wobei weitere Vertiefungen (V5) mit einer zugehörigen Umformtiefe als Dichtungsnut ausgebildet sind.

13. Bipolarplatte nach einem der Ansprüche 1 bis 12, wobei weitere Vertiefungen (V6) mit einer zugehörigen Umformtiefe, die entlang des Verlaufs der Vertiefung variabel, insbesondere ansteigend ist, einen Übergangsbereich bilden.

14. Bipolarplatte nach einem der Ansprüche 1 bis 13, wobei das platteninnere Strömungsfeld (F2) quer und/oder längs zu den plattenäußeren Strömungsfeldern (F1, F3) verläuft.

15. Bipolarplatte nach einem der Ansprüche 1 bis 14, wobei eines der plattenäußeren Strömungsfeldern (F1) an einer Kathode und das andere plattenäußere Strömungsfeld (F3) an einer Anode eines Brennstoffzellenstapels anordbar sind.

16. Bipolarplatte nach einem der Ansprüche 1 bis 15, wobei der jeweilige Formkörper (2) in einem geeigneten, randseitig gelegenen Bereich Durchbrüche (2 bis 5) aufweist.

17. Bipolarplatte nach einem der Ansprüche 1 bis 16, **dadurch gekennzeichnet, dass** die Formkörper (2) aus einem elektrisch leitfähigen Werkstoff, insbesondere jeweils aus einem geformten Metallblech oder einem elektrisch leitfähigen Kunststoffformteil gebildet sind.

18. Brennstoffzellenstapel mit mehreren Bipolarplatten (6) nach einem der vorhergehenden Ansprüche 1 bis 17, auf welche ober- und/oder unterseitig abwechselnd Mernbran-Elektroden-Einheiten aufstapelbar sind.

Fig. 1

EP 1 919 017 A1

1

4

5

V1 V2

V2

V3

V1

V4

V5

V4

V6

V4

Z

V2

F1

F2

2

3

Fig. 2

Fig. 3

EP 1 919 017 A1

Fig. 4

12

| Europäisches Patentamt | EUROPÄISCHER RECHERCHENBERICHT | Nummer der Anmeldung EP 07 01 7196 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2005/064270 A1 (MARIANOWSKI LEONARD G [US]) 24. März 2005 (2005-03-24) * Abbildungen 1-5 * * Absätze [0022], [0024] - [0026], [0031], [0032] * * Anspruch 1 * | 1-9, 14-18 | INV. H01M8/02 |
| X | US 2005/244703 A1 (OSENAR PAUL [US] ET AL) 3. November 2005 (2005-11-03)  * Abbildungen 2-7,16A,16B,17 * * Absätze [0007], [0064] - [0071], [0074] * * Anspruch 1 * | 1-4, 10-12, 14-18 | |
| X | US 2004/106028 A1 (SUGIURA SEIJI [JP] ET AL) 3. Juni 2004 (2004-06-03) * Abbildungen 1-7,11 * * Absätze [0032], [0033], [0040] * * Ansprüche 1,2 * | 1-9, 13-18 | |
| X | EP 1 435 671 A (BEHR GMBH & CO [DE] BEHR GMBH & CO KG [DE]) 7. Juli 2004 (2004-07-07) * Absätze [0026] - [0028], [0032] * * Ansprüche 1-10 * * Abbildungen 2,3,5-8 * | 1-4,10, 14-18 | RECHERCHIERTE SACHGEBIETE (IPC) H01M |
| X | EP 1 496 328 A (BEHR GMBH & CO KG [DE]) 12. Januar 2005 (2005-01-12) * Absätze [0040], [0042] * * Abbildungen 9,10 * | 1-4,10, 14-18 | |

Der vorliegende Recherchenbericht wurde für alle Patentansprüche erstellt

| Recherchenort Den Haag | Abschlußdatum der Recherche 29. November 2007 | Prüfer Knoflacher, Andreas |

**ANHANG ZUM EUROPÄISCHEN RECHERCHENBERICHT
ÜBER DIE EUROPÄISCHE PATENTANMELDUNG NR.**

EP 07 01 7196

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

29-11-2007

| Im Recherchenbericht angeführtes Patentdokument | | Datum der Veröffentlichung | Mitglied(er) der Patentfamilie | | Datum der Veröffentlichung |
|---|---|---|---|---|---|
| US 2005064270 | A1 | 24-03-2005 | WO | 2005031938 A2 | 07-04-2005 |
| US 2005244703 | A1 | 03-11-2005 | KEINE | | |
| US 2004106028 | A1 | 03-06-2004 | JP | 2004193110 A | 08-07-2004 |
| EP 1435671 | A | 07-07-2004 | AT | 332015 T | 15-07-2006 |
| | | | DE | 10347229 A1 | 13-05-2004 |
| | | | ES | 2266702 T3 | 01-03-2007 |
| EP 1496328 | A | 12-01-2005 | DE | 10331406 A1 | 27-01-2005 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10015360 A1
- DE 102005046795
- DE 102005055043 A1
- DE 102004039779 A1
- US 6510870 B1
- DE 102005058350